# EUROPEAN PATENT SPECIFICATION

(11) **EP 3 317 169 B1**
(45) Date of publication and mention of the grant of the patent: **03.06.2020**
(21) Application number: 16821730.5
(22) Date of filing: 13.06.2016
(51) Int. Cl.: B62D 61/12, B62D 55/02, B62D 55/10, B62D 55/108, B62D 55/12, B62D 55/30, B62D 59/04

(54) **ARRANGEMENT AND VEHICLE**
ANORDNUNG UND FAHRZEUG
AGENCEMENT ET VÉHICULE

(30) Priority: 03.07.2015 SE 1550971
(43) Date of publication of application: 09.05.2018
(73) Proprietor: Komatsu Forest AB, 907 04 Umeå (SE)
(72) Inventor: NILSSON, Erik, 913 42 Obbola (SE); BOSTRÖM, Ola, 907 88 Täfteå (SE)
(74) Representative: Zacco Sweden AB
(86) International application number: PCT/SE2016/050570
(87) International publication number: WO 2017/007396

(56) References cited:
- WO-A1-2013/178882
- US-A- 2 974 976
- US-A- 4 079 798
- US-A- 4 657 099

## Description

### TECHNICAL AREA

This invention concerns an arrangement intended to be mounted at a vehicle that comprises a load-bearing part and driving wheels. The invention concerns also a vehicle comprising such an arrangement.

### BACKGROUND

Vehicles, machines, agricultural machines and forestry machines have long been used within forestry in order to automate many of the operations that are to be carried out on location in a forest. The vehicles have a weight that is not insignificant, independently of whether they are driven with the aid of wheels or tracks, which means that the forest, the support of the vehicle in the forest, the ground, over which the vehicle is driven and on which it stands, is affected. The ground is compressed by the weight of the vehicle and the damage to the ground may be permanent in the form of damage that does not recover without intervention. This damage to the ground may result in erosion, leakage of humus and nutrients, the unplanned formation of ditches, and compression of the pore system of the ground, all of which may have consequences. All such consequences affect the remaining forest, through, for example, lower resistance to storms due to roots that are torn off and/or thick roots that are shallow, to increased root rot as a consequence of root damage, and to loss of growth. Once the damage has taken place, all attempts to restore the ground are expensive, or totally impossible.

Repair of damage caused by driving is most often of a cosmetic nature. Up to half of the support capacity of the ground arises from the roots. The support capacity is, therefore, difficult to restore when the vegetation and root systems have been broken. Furthermore, repair by, for example, the use of an excavator means that the ground is excavated one more time. This increases further the risk for the undesired transport of slurry, humus, nutrients and heavy metals into lakes and watercourses. For these reasons, the damage caused by driving should be attempted to be prevented as far as possible.

In order to avoid damage to the ground and damage caused by driving, a great deal of time has been invested in planning appropriate routes, passages and collection points well in advance of a felling operation. This is not only time-consuming but also expensive.

The compression of the ground by the weight of the vehicle can lead also to the driving of the vehicle becoming more difficult.

US4079798 discloses a solution to reduce the pressure exerted against the ground, by using extra wheels. The solution usies an auxiliary wheel unit for reducing concentrated loads on heavy load-carrying vehicles.

Patent application WO 2013/178882 A1, which relates to an arrangement in a forestry machine, discloses a solution comprising at least one auxiliary wheel, in order to increase the load-bearing capacity of the rear part. The extra wheel(s) can be individually controlled in the vertical direction and are mounted at the vehicle in order to distribute the weight of the vehicle. The arrangement includes a track running around both a set of bogie wheels and an auxiliary wheel. It also discloses that the tension in the track can be influenced by the position of the support arm, so that the tension in the track remains essentially constant.

### SUMMARY OF THE INVENTION

One purpose of the present arrangement is to reduce the influence on the forest from a vehicle, on the support of the vehicle in the forest, on the ground, where the vehicle is driven or allowed to stand. This purpose is achieved with an arrangement comprising the technical features that are made clear by claim 1. This purpose is achieved also with a vehicle comprising such an arrangement according to claim 14.

### DESCRIPTION OF DRAWINGS

Figure 1 shows a vehicle and an arrangement according to the invention.
Figure 2 shows also a vehicle and an arrangement according to the invention, seen from above.
Figure 3 shows a detailed drawing of an extra wheel comprised in an arrangement according to the invention.
Figure 4 shows an auxiliary motor comprised in an arrangement according to the invention.
Figure 5 shows a damping arrangement comprised in an arrangement according to the invention.

### DESCRIPTION OF EMBODIMENTS

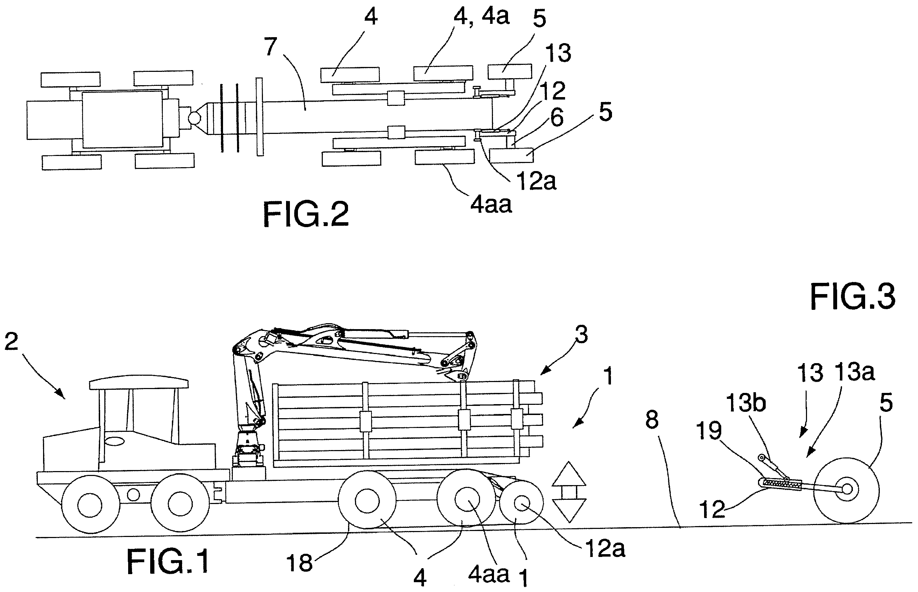

This invention concerns an arrangement 1 intended to be mounted at a vehicle 2 comprising a load-bearing part 3 and driving wheels 4, where the arrangement 1 comprises at least two extra wheels 5 that can be individually controlled where each extra wheel 5 is arranged at a shaft 6 and is arranged at the frame 7 of the vehicle in order to distribute the weight of the machine, the gross weight of the machine including its payload weight, over more areas of a support 8, the ground, and in this way improve the distribution of weight and reduce the pressure against the support 8, the ground from a vehicle 2. The extra wheels 5 give a direct support and a supplementary ability to distribute the weight, in addition to the normal vehicle wheels 4. The shaft 6 is fixed: it is non-rotatable and non-pivotable. See Figures 1-3.

The term "individually controlled extra wheels 5" is here used to denote that each extra wheel, independently of its location on the vehicle 2, can be controlled and adjusted and can follow the support 8, without being influenced by, and without influencing, other extra wheels and their locations. It is possible also that two extra wheels 5 be located on the same side of the vehicle 2, if this is required in special terrain. It is possible also that more than two extra wheels 5 be mounted at a vehicle.

The individually controlled extra wheels 5 are subject to a driving force. The driving force on the wheels further facilitates the driving of the vehicle 2 on the support 8, and since the extra wheels 5 are driven and move relative to the support, the extra wheels 5 will be in motion and will not become as easily stuck in such material as is located on the support 8, such as, for example, vegetation.

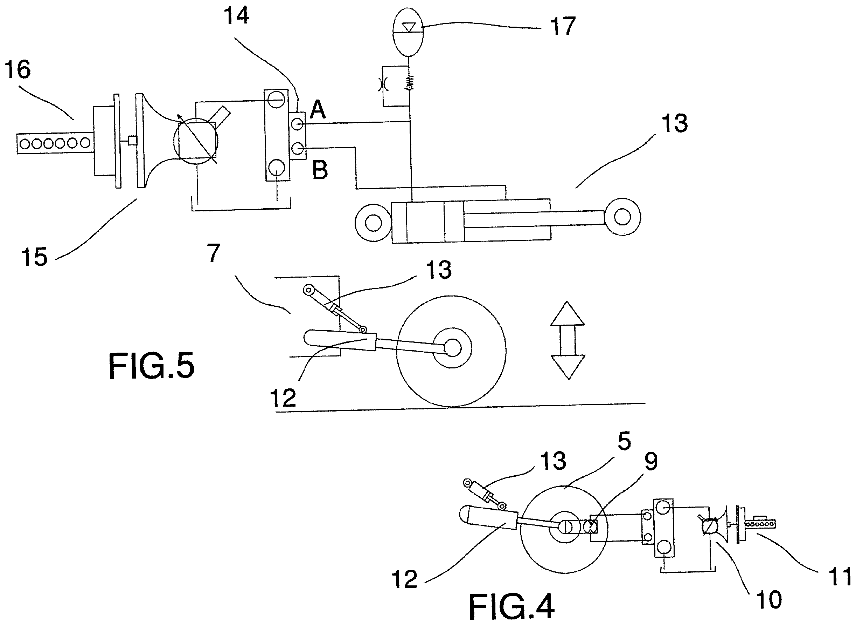

The individually controlled extra wheels 5 may be hydraulically driven or electrically driven. It is appropriate that the arrangement 1 comprise an auxiliary motor 9 that drives the extra wheel 5. The motor 9 is driven by a hydraulic system comprising a pump 10. The pump 10 is driven by an additional source of energy 11, such as, for example, a diesel engine, electric motor or similar. See Figure 4.

The arrangement 1 comprises at least two arms 12 on which the extra wheels 5 are mounted. Each arm 12 is individually controlled and mounted in bearings, and can move independently of the motion of the other arm. Each arm 12 is mounted in bearings in a horizontal axis 12a that essentially coincides with the closest wheel 4a of the bogie and its wheel axle 4aa, in order to permit the extra wheel 5 to be lifted up and down without the axle separation between the closest wheel 4a of the bogie and the extra wheel 5 changing by any amount worthy of mention.

Each arm 12 comprises at least one arrangement 13 that damps the motions of the arm and that retains, presses, the extra wheel 5 onto the support 8. It is appropriate that the arrangement 13 comprise a damping arrangement 13a that in turn comprises a damped cylinder 13b. The cylinder 13b of the arm is a damped cylinder that retains, presses, the extra wheel 5 against the support 8 in order to ensure that the extra wheel 5 is in contact with the support 8 and in this way improve the distribution of weight and reduce the pressure exerted by the vehicle 2 onto the support 8, the ground. The damped cylinder 13b is controlled by a hydraulic unit 14 that is fed by a hydraulic pump 15 that obtains its energy from a selected source of energy 16, such as, for example, an electric motor, a diesel engine or other source of energy or source of power. The damping arrangement, the damping cylinder 13, comprises an accumulator 17 that offers a spring facility and that can store energy for a short period. See Figure 5.

The arrangement 1 comprises a track 18 that is placed around a set of bogie wheels 4 and the extra wheel 5 in order to protect against skidding and to distribute the weight, reducing the ground pressure. See Figure 1.

The arrangement comprises a tension arrangement 19 in the form of a spring-loaded arrangement, such as a cylinder under pressure or a coiled spring unit, in order to absorb motions along the length of the arm 12 such that the length of the track, and its tension, do not change when the arm 12 moves up and down. See Figure 3.

Two extra wheels 5 are arranged at the frame 7 of the vehicle, one extra wheel 5 on each side of the vehicle 2, one extra wheel 5 at one of the two bogie wheels 4 in the forwards and/or backwards direction of the vehicle 2 one on each side of the vehicle 2. Alternatively, four extra wheels 5 are arranged at the frame 7 of the vehicle, two extra wheel 5 on each side of the vehicle 2, one extra wheel 5 at each bogie wheel 4 in the forwards and backwards direction of the vehicle 2, in a configuration that is not shown in the drawings.

The invention concerns also a vehicle 2 comprising an arrangement 1 of the type that has been described above. The load-bearing part 3 of the vehicle comprises a conventional load-bearing frame. The load-bearing part may comprise also a separate displaceable load carrier. The driving bogie wheels 4 of the vehicle comprise a mechanically driven, a hydraulically driven, or an electrically driven bogie. See Figures 1-5.

The vehicle 2 is intended to be used within forestry or agriculture since it is within these fields of use that it is economically and biotopically interesting that damage to the ground is avoided or at least minimised. Other fields of use in which damage to the ground should be avoided or at least minimised may, of course, become relevant.

## Claims

1. An arrangement (1) intended to be mounted at a vehicle (2) intended for forestry, comprising a load-bearing part (3) and driving bogie wheels (4) where the arrangement (1) comprises at least two extra wheels (5) that can be individually controlled in the vertical direction where each extra wheel is arranged at a shaft (6) that is fixed and that is not rotatable, pivotable, and is arranged at the frame (7) of the vehicle in order to distribute the weight of the machine, the gross weight of the machine including its payload weight, over more areas of a support (8) and in this way improve the distribution of weight and reduce the pressure exerted against the support (8), **characterised in that** the individually controlled extra wheels (5) are subject to a driving force and mounted at at least two arms (12) arranged at the frame of the vehicle, that a track (18) is placed around each set of bogie wheels (4) and the extra wheel (5) in order to protect against skidding and to distribute the weight, reducing the ground pressure, and that a tension arrangement (19) in the form of a cylinder under pressure or a coiled spring unit is arranged at each arm in order to absorb motions in the length of the arm (12) such that the length of the track does not change when the arm (12) moves up and down.

2. The arrangement according to claim 1, comprising an auxiliary motor (9) that drives the extra wheel (5).

3. The arrangement according to claim 2, where the motor (9) is driven by a hydraulic system comprising a pump (10).

4. The arrangement according to claim 3, where the pump (10) is driven by a further source of energy (11).

5. The arrangement according to claim 1, where each arm (12) is individually controlled and mounted in bearings, and can move independently of the motion of the other arm.

6. The arrangement according to any one of the preceding claims, where each arm (12) is mounted in bearings in a horizontal axis (12a) that essentially coincides with a wheel axle (4aa) at the wheel (4a) at the bogie that is closest to the extra wheel, in order to permit the extra wheel (5) to be lifted up and down without the axle separation between the closest wheel (4a) of the bogie and the extra wheel (5) changing by any amount worthy of mention.

7. The arrangement according to any one of the preceding claims, where each arm (12) comprises at least one arrangement (13) that damps the motions of the arm and that retains, presses, the extra wheel (5) against the support (8) in order to ensure that the extra wheel (5) is in contact with the support (8) and in this way improve the distribution of weight and reduce the pressure exerted against the support (8).

8. The arrangement according to claim 7, where the arrangement (13) comprises at least one damping arrangement (13a).

9. The arrangement according to any one of claims 7-8, where the damping arrangement (13) comprises at least one damped cylinder (13b).

10. The arrangement (1) according to claim 9, where the damped cylinder (13b) is controlled by a hydraulic unit (14) that is fed by a hydraulic pump (15) that obtains its energy from a selected source of energy (16).

11. The arrangement (1) according to any one of claims 7-10, comprising an accumulator (17) that offers a spring facility and that can store energy for a short period.

12. The arrangement according to any one of claims 1-11, where two extra wheels (5) are arranged at the frame (7) of the vehicle, one extra wheel (5) on each side of the vehicle (2), one extra wheel (5) at one of the two bogie wheels (4, 4a) in the forwards and/or backwards direction of the vehicle, one on each side of the vehicle.

13. The arrangement according to any one of claims 1-12, where four extra wheels (5) are arranged at the frame (7) of the vehicle, two extra wheels (5) on each side of the vehicle (2), one extra wheel (5) at each bogie wheel (4) in the forwards and backwards direction of the vehicle (2).

14. A vehicle (2) comprising an arrangement according to any one of claims 1-13.

15. The vehicle (2) according to claim 14, where the load-bearing part (3) comprises a conventional load-bearing frame.

16. The vehicle (2) according to claim 15, where the load-bearing part (3) comprises a separate displaceable load carrier.

17. The vehicle (2) according to any one of claims 14-16, where the driving wheels (4) comprise a mechanically driven bogie.

18. The vehicle (2) according to any one of claims 14-16, where the driving wheels (4) comprise a hydraulically driven bogie.

19. The vehicle (2) according to any one of claims 14-16, where the driving wheels comprise an electrically driven bogie.

## Patentansprüche

1. Anordnung (1), der für das Montieren an einem für Forstarbeit eingerichteten Fahrzeug (2) vorgesehen ist, umfassend einen lasttragenden Teil (3) und Antriebslaufräder (4), wobei die Anordnung (1) mindestens zwei Zusatzräder (5) umfasst, die in der Vertikalrichtung einzeln gesteuert werden können, wobei jedes Zusatzrad an einer Welle (6) angeordnet ist, die fest ist und nicht drehbar, schwenkbar ist und am Rahmen (7) des Fahrzeugs angeordnet ist, um das Gewicht der Maschine, wobei das Bruttogewicht der Maschine ihr Nutzlastgewicht umfasst, über mehrere Bereiche einer Unterstützung (8) zu verteilen und damit die Verteilung von Gewicht zu verbessern und den auf die Unterstützung (8) ausgeübten Druck zu verringern, **dadurch gekennzeichnet, dass** die einzeln gesteuerten Zusatzräder (5) einer Antriebskraft ausgesetzt sind und an mindestens zwei Armen (12), die am Rahmen des Fahrzeugs angeordnet sind, montiert sind, dass eine Gleiskette (18) um jeden Satz der Laufräder (4) und das Zusatzrad (5) herum angeordnet ist, um gegen Rutschen zu schützen und das Gewicht zu verteilen, wodurch die Bodenpressung verringert wird, und dass eine Spannanordnung (19) in Form eines Zylinders unter Druck oder eine Spiralfedereinheit an jedem Arm angeordnet ist, um Bewegungen in der Länge des Arms (12) zu absorbieren, so dass die Länge der Gleiskette sich nicht verändert, wenn der Arm (12) sich nach oben und unten bewegt.

2. Anordnung nach Anspruch 1, umfassend einen das Zusatzrad (5) antreibenden Hilfsmotor (9).

3. Anordnung nach Anspruch 2, wobei der Motor (9) durch ein eine Pumpe (10) umfassendes Hydrauliksystem angetrieben wird.

4. Anordnung nach Anspruch 3, wobei die Pumpe (10) durch eine weitere Energiequelle (11) angetrieben wird.

5. Anordnung nach Anspruch 1, wobei jeder Arm (12) einzeln gesteuert wird und in Lagern montiert ist und sich unabhängig von der Bewegung des anderen Arms bewegen kann.

6. Anordnung nach einem der vorhergehenden Ansprüche, wobei jeder Arm (12) in Lagern in einer horizontalen Achse (12a) montiert ist, die im Wesentlichen mit einer Radwelle (4aa) am Rad (4a) am Fahrgestell, das am Zusatzrad am nächsten ist, zusammenfällt, um zu erlauben, dass das Zusatzrad (5) gehoben und gesenkt wird, ohne dass die Wellentrennung zwischen dem nächst gelegenen Rad (4a) des Fahrgestells und dem Zusatzrad (5) sich erwähnenswert verändert.

7. Anordnung nach einem der vorhergehenden Ansprüche, wobei jeder Arm (12) mindestens eine die Bewegungen des Arms dämpfende Anordnung (13) umfasst, die das Zusatzrad (5) gegen die Unterstützung (8) hält, drückt, um sicherzustellen, dass das Zusatzrad (5) mit der Unterstützung (8) in Kontakt steht und auf diese Weise die Gewichtsverteilung verbessert und den auf die Unterstützung (8) ausgeübten Druck verringert.

8. Anordnung nach Anspruch 7, wobei die Anordnung (13) mindestens eine Dämpfungsanordnung (13a) umfasst.

9. Anordnung nach einem der Ansprüche 7 bis 8, wobei die Dämpfungsanordnung (13) mindestens einen gedämpften Zylinder (13b) umfasst.

10. Anordnung (1) nach Anspruch 9, wobei der gedämpfte Zylinder (13b) von einer Hydraulikeinheit (14) gesteuert wird, die von einer Hydraulikpumpe (15) gespeist wird, die ihre Energie aus einer ausgewählten Energiequelle (16) gewinnt.

11. Anordnung (1) nach einem der Ansprüche 7 bis 10, umfassend einen Ackumulator (17), der eine Federeinrichtung bietet und Energie für einen kurzen Zeitraum speichern kann.

12. Anordnung nach einem der Ansprüche 1 bis 11, wobei an dem Rahmen (7) des Fahrzeugs zwei Zusatzräder (5) angeordnet sind, ein Zusatzrad (5) auf jeder Seite des Fahrzeugs (2), ein Zusatzrad (5) an einem der beiden Fahrgestellräder (4, 4a) in der Vorwärts-und/oder Rückwärtsrichtung des Fahrzeugs, eines auf jeder Seite des Fahrzeugs.

13. Anordnung nach einem der Ansprüche 1 bis 12, wobei an dem Rahmen (7) des Fahrzeugs vier Zusatzräder (5) angeordnet sind, an jeder Seite des Fahrzeugs (2) zwei Zusatzräder (5), ein Zusatzrad (5) an jedem Fahrgestellrad (4) in der Vorwärts-und Rückwärtsrichtung des Fahrzeugs (2).

14. Fahrzeug (2), umfassend eine Anordnung nach einem der Ansprüche 1 bis 13.

15. Fahrzeug (2) nach Anspruch 14, wobei der lasttragende Teil (3) einen herkömmlichen lasttragenden Rahmen umfasst.

16. Fahrzeug (2) nach Anspruch 15, wobei der lasttragende Teil (3) einen getrennten verlagerbaren Lastträger umfasst.

17. Fahrzeug (2) nach einem der Ansprüche 14 bis 16, wobei die Antriebslaufräder (4) ein mechanisch angetriebenes Fahrgestell umfassen.

18. Fahrzeug (2) nach einem der Ansprüche 14 bis 16, wobei die Antriebslaufräder (4) ein hydraulisch angetriebenes Fahrgestell umfassen.

19. Fahrzeug (2) nach einem der Ansprüche 14 bis 16, wobei die Antriebslaufräder ein elektrisch angetriebenes Fahrgestell umfassen.

## Revendications

1. Dispositif (1) destiné à être monté au niveau d'un véhicule (2) destiné à la foresterie, comprenant une partie de support de charge (3) et des roues motrices de bogie (4), le dispositif (1) comprenant au moins deux roues supplémentaires (5) qui peuvent être contrôlées individuellement dans le sens vertical, chaque roue supplémentaire étant disposée sur un arbre (6) qui est fixe et qui n'est pas rotatif, pivotant et est disposé au niveau d'un châssis (7) du véhicule afin de répartir le poids de la machine, le poids brut de la machine, y compris son poids de charge utile, sur plusieurs zones d'un support (8) et ainsi améliorer la répartition du poids et réduire la pression exercée contre le support (8), **caractérisé en ce que** les roues supplémentaires et commandées individuellement (5) sont soumises à une force motrice et montées au niveau d'au moins deux bras (12) disposés au niveau du châssis du véhicule, qu'une piste (18) est placée autour de chaque jeu de roues de bogie (4) et de la roue supplémentaire (5) afin de protéger contre le dérapage et de distribuer le poids, réduisant la pression au sol, et qu'un dispositif de tension (19) dans la forme d'un cylindre sous pression ou d'une unité de ressort hélicoïdal est disposé à chaque bras afin d'absorber les mouvements dans la longueur du bras (12) de telle sorte que la longueur de la piste ne change pas lorsque le bras (12) monte et descend.

2. Dispositif selon la revendication 1, comprenant un moteur auxiliaire (9) qui entraîne la roue supplémentaire (5).

3. Dispositif selon la revendication 2, dans lequel le moteur (9) est entraîné par un système hydraulique comprenant une pompe (10).

4. Dispositif selon la revendication 3, dans lequel la pompe (10) est entraînée par une autre source d'énergie (11).

5. Dispositif selon la revendication 1, dans lequel chaque bras (12) est commandé individuellement et monté dans des paliers, et peut se déplacer indépendamment du mouvement de l'autre bras.

6. Dispositif selon l'une quelconque des revendications précédentes, dans lequel chaque bras (12) est monté dans des paliers dans un axe horizontal (12a) qui coïncide essentiellement avec un essieu de roue (4aa) au niveau de la roue (4a) au niveau du bogie le plus proche à la roue supplémentaire, afin de permettre à la roue supplémentaire (5) d'être soulevée de haut en bas sans que la séparation de l'essieu entre la roue la plus proche (4a) du bogie et la roue supplémentaire (5) ne change de quelque manière que ce soit digne de mention.

7. Dispositif selon l'une quelconque des revendications précédentes, dans lequel chaque bras (12) comprend au moins un agencement (13) qui amortit les mouvements du bras et qui retient, pousse, la roue supplémentaire (5) contre le support (8) afin d'assurer que la roue supplémentaire (5) est en contact avec le support (8) et ainsi d'améliorer la répartition du poids et de réduire la pression exercée contre le support (8).

8. Dispositif selon la revendication 7, dans lequel l'agencement (13) comprend au moins un agencement d'amortissement (13a).

9. Dispositif selon l'une quelconque des revendications 7 à 8, dans lequel l'agencement d'amortissement (13) comprend au moins un cylindre amorti (13b).

10. Dispositif (1) selon la revendication 9, dans lequel le cylindre amorti (13b) est commandé par une unité hydraulique (14) qui est alimentée par une pompe hydraulique (15) qui obtient son énergie à partir d'une source d'énergie sélectionnée (16).

11. Dispositif (1) selon l'une quelconque des revendications 7 à 10, comprenant un accumulateur (17) qui offre une installation à ressort et qui peut stocker de l'énergie pendant une courte période.

12. Dispositif selon l'une quelconque des revendications 1 à 11, dans lequel deux roues supplémentaires (5) sont disposées au niveau du châssis (7) du véhicule, une roue supplémentaire (5) de chaque côté du véhicule (2), une roue supplémentaire (5) au niveau de l'une des deux roues de bogie (4, 4a) dans le sens avant et / ou arrière du véhicule, une de chaque côté du véhicule.

13. Dispositif selon l'une quelconque des revendications 1 à 12, dans lequel quatre roues supplémentaires (5) sont disposées au niveau du châssis (7) du véhicule, deux roues supplémentaires (5) de chaque côté du véhicule (2), une roue supplémentaire (5) au niveau de chaque roue de bogie (4) dans le sens avant et arrière du véhicule (2).

14. Véhicule (2) comprenant un dispositif selon l'une quelconque des revendications 1 à 13.

15. Véhicule (2) selon la revendication 14, dans lequel la partie de support de charge (3) comprend un châssis de support de charge conventionnel.

16. Véhicule (2) selon la revendication 15, dans lequel la partie de support de charge (3) comprend un support de charge déplaçable et séparé.

17. Véhicule (2) selon l'une quelconque des revendications 14 à 16, dans lequel les roues motrices (4) comprennent un bogie entraîné mécaniquement.

18. Véhicule (2) selon l'une quelconque des revendications 14 à 16, dans lequel les roues motrices (4) comprennent un bogie entraîné hydrauliquement.

19. Véhicule (2) selon l'une quelconque des revendications 14 à 16, dans lequel les roues motrices comprennent un bogie entraîné électriquement.
